# EUROPEAN PATENT SPECIFICATION

(11) **EP 1 726 521 B1**
(45) Date of publication and mention of the grant of the patent: **31.10.2012**
(21) Application number: 06114299.8
(22) Date of filing: 22.05.2006
(51) Int. Cl.: B63J 4/00, B63B 29/16, C02F 1/24

(54) **Sewage treatment system on board sea craft**
Abwasserbehaldlungssystem am Bord eines Schiffes
Système de traitement des eaux usées à bord d'un bateau

(30) Priority: 27.05.2005 IT MI20050997
(43) Date of publication of application: 29.11.2006
(73) Proprietor: Tecnicomar S.p.A., 91025 Marsala (TP) (IT)
(72) Inventor: De Vita, Francesco, 91025, MARSALA (Trapani) (IT)
(74) Representative: Cosenza, Simona

(56) References cited:
- US-A- 3 974 075
- US-A- 4 162 656
- US-B1- 6 745 407

## Description

The present invention relates to a sewage treatment system for installation on board sea craft.

In the field of sailing up till now, it was obligatory to maintain sewage in specific holding tanks on board the craft, for successive discharging in ports equipped with purifiers, or it was necessary to call professional pumping companies to empty such tanks.

Therefore it has always been essential to have the possibility of an immediate system for treating sewage on board, before its elimination into the sea.

The situation described above is also associated with the usual problems involving available space on a boat, and the limited amount of energy available on board. Furthermore, any system of the type described above must also comply with the IMO/MARPOL no. MEPC2 (VI) standards currently in force to prevent marine pollution and sea craft equipment, according to the European Directive 96/98/EC (MED) and therefore, it must also be acceptable to the Coast Guard (USA).

According to the preamble of claim 1, it is known a system for the treatment of sewage on board sea craft comprising:
- a treatment tank to which are associated a sewage macerator pump for sewage transfer through a first pipe connected to a boat's holding tank;
- a second pipe on which a sea water transfer pump is provided;
- a third pipe mounted with a metering pump for the sterilising compound contained in a separate tank;
- an electric control panel with liquid crystal display and touch keyboard, controlled by a microprocessor; wherein to said treatment tank are associated at least two level sensors to determine the amount of liquid to be treated.

The aim of the present invention is to realise a system and a method that are able to solve all the technical problems set forth previously in complete compliance with the aforesaid regulations.

A further aim is to realise a system that is extremely simple, reliable and easily controlled by the operator.

Another aim is to realise a system that does not involve high costs, so that it is economically more advantageous than the elimination of waste by professional pumping companies.

According to the present invention, these aims are achieved with the installation of the waste treatment system directly on board according to claim 1.

Further characteristics of the invention will be made clear in the following claims.

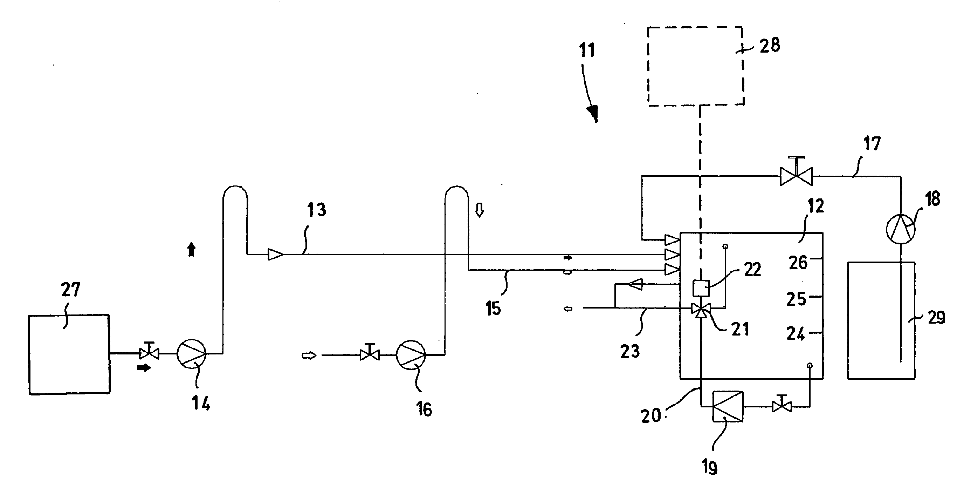

The characteristics and advantages of a sewage treatment system on board sea craft according to the invention will be made clearer in the following description provided as a non-limiting example, with reference to the appended drawing which shows a system according to the present invention.

With reference to the figure, a system for treating sewage on board sea craft, subject of the present invention, is schematically shown and identified throughout by the numeral 11.

The sewage treatment system 11 essentially comprises a treatment tank 12 for sewage from various services on the craft (not shown) sent to an holding tank 27, and transferred to the treatment tank 12 by means of a sewage transfer macerating pump 14 and a first pipe 13.

Parallel with such first pipe 13, also directed towards the treatment tank 12, a second pipe 15 is arranged, on which is provided a seawater transfer pump 16.

A third pipe 17 foresees a metering pump 18 for a sterilising compound contained in a separate tank 29.

A macerating and recirculation pump 19 is operatively connected with the treatment tank 12 through a pipe 20, on which it is provided a three-way valve 21 equipped with an actuator 22 for ricirculation and maceration, or for discharging the treated liquid into the sea.

Three capacity level sensors 24, 25, and 26 are also associated with the treatment tank 12, and installed on the exterior of said tank; the first two sensors determine the amount of liquid to be treated, and the last acts as a safety sensor to control the "overflow".

The whole system is electronically controlled and managed by an electric control board with a microprocessor and back-lit liquid crystal display, and touch key board, schematically shown at 28, mounted on the front of the tank.

The control and command panel is designed for "automatic mode" where the system is totally automatic and no activities are required of the operator, as well as "manual mode" with which the operator must start up and stop the system, and is able to operate the various pumps separately.

The display on the control and command panel shows all the various treatment cycle steps. All visual, acoustic, and system fault alarms are shown on the operator panel and can be retransmitted by remote control through a signal in the terminal or through remote control with a display (not shown). The control and command panel can be interfaced with the craft's personal computer (not shown) or monitoring system (not shown) for remote control system operation.

This is an automatic system electronically operated by a new generation microprocessor that makes the system independent of operator intervention.

The treatment tank 12 is built from bent and welded AISI 316L type stainless steel sheet, with two internal splash plates, also in AISI 316L type stainless steel sheet, aimed at reinforcing the tank and making it more rigid, thus limiting internal splashing at the same time.

In addition, the treatment tank 12 is fixed to a support base (not shown) with bolts, which is also the support for the maceration and recirculation pump 19.

On the front part of the treatment tank 12, are the control and command panel, with the liquid crystal display and touch key board 28, the three-way valve 21, with the actuator 22 and the capacity level sensors 24, 25, and 26.

The treatment tank 12, like all the other parts in AISI 316L stainless steel in the system, are subject to chemical treatment in order to inhibit corrosion, which is otherwise inevitable after any welding operations. Although it is separate from the waste treatment tank 12, the structure of the metering pump of the oxidising liquid, and its relative tank, also made of stainless steel, and the two pumps for transferring sea water and sewage, are all part of the unit.

The disinfectant liquid adopted is generally one of the following three types: hydrogen peroxide, sodium hypochlorite and peracetic acid, each one measured in different quantities and with different contact times. It is obvious that the system can be operated normally with other types of disinfectant.

The purification process of the sewage of the system according to the invention is based on the chemical oxidation process carried out by an oxidising agent, which acts for a predetermined period of time. The compounds that can be adopted to perform this action are sodium hypochlorite, peracetic acid and hydrogen peroxide, in quantities and according to periods of time that vary according to the data reported in table 1 below.

**Table 1**

| Reagent | Metering (ppm) | Contact time (min) |
|---|---|---|
| Sodium hypochlorite | 5 - 15 | 30 - 40 |
| Hydrogen peroxide | 5 - 8 | 12 |
| Peracetic acid | 10 | 15 - 20 |

In detail, the system 11 operates according to a series of cycles for a total period of approximately 15 minutes (with hydrogen peroxide) comprising a series of different steps.

In an initial sep, the sewage is transferred from the holding tank of the boat 27 to the treatment tank 12 by the pump 14, until a first level detected by the sensor 24. The amount of sewage to be transferred in each cycle is established during the project design stage, and is appropriately signalled by the aforesaid sensor. It must be noted that during this step a level sensor (not shown) located inside the boat's holding tank (27) provides the necessary consent signal to the transfer pump 14, that transfers an amount of sewage into tank 12 of the system as determined by the sensor 24.

Next, during the second step, the microprocessor activates the metering pump 18 for an established period of time, to inject the disinfectant in determined quantities into tank 12, thus starting up the oxidation stage.

During the third step, the seawater transfer pump 16 is activated to fill the treatment tank 12 with sea water thus diluting the sewage. The filling limit of tank 12 is signalled by the second level sensor 25.

In the fourth step, due to the activation of the macerating and recirculation pump 19, the crushing of any solids maintained in suspension takes place in order to reduce their size, for an established time in the presence of a selected disinfectant. During this step the liquids are mixed in a vortex action to facilitate the chemical oxidising process of organic materials.

During the final or fifth step, the purified sewage is discharged overboard by the macerating pump, whose flow is deviated by the three-way valve 21, controlled by the actuator 22.

When the fifth step is completed, the cycle begins again without a continuity solution, in that the machine will automatically activate the sewage treatment cycle as soon as the accumulated amount of sewage reaches the predetermined maximum level for cycle start-up. The system remains in operation until the minimum level has been reached.

It should also be noted that the sewage treatment system according to the invention is a compact unit, particularly light in weight and silent. In fact, the noise level is measured at 65 dBA at a distance of 1 meter. It is available in a 24 volt direct current version, or 230 or 400 Volt in alternate current at 50 or 60 Hz (Eurovoltage), with low power absorbency, only 0.75 KW.

This is an automatic system, electronically controlled by a new generation microprocessor, that makes the system self-operating, without the need for operator intervention.

The maximum sizes of a preferred embodiment are 65 x 51 x 67 cms, making the system able to treat 4000 litres of sewage per day, for example; and therefore ideal for small to medium craft.

The main advantages of the system subject of the present invention are listed as follows:
- the treatment cycle is extremely short, with the consequential increase of the volume of sewage to be treated daily.
- Particularly contained size and weight making it easy to install on board, even on small-sized boats.
- Operating functions completely "automatic" and "manual".
- No solid deposit in tank 12.
- Very low power consumption.
- Very low noise level.
- No release of toxic or polluting substances.

## Claims

1. System for the treatment of sewage (11) on board sea craft, said system comprising a treatment tank (12) to which are associated a sewage macerator pump (14) for sewage transfer through a first pipe (13) connected to a boat's holding tank (27), a second pipe (15) on which a sea water transfer pump (16) is provided, a third pipe (17) mounted with a metering pump (18) for the sterilising compound contained in a separate tank (29), to said treatment tank (12) being associated at least two level sensors (24, 25, and 26) to determine the amount of liquid to be treated and an electric control panel with liquid crystal display and touch keyboard, controlled by a microprocessor (28), **characterised in that** the system comprises a macerating and recirculation pump (19) arranged on a fourth pipe (20) equipped with a three-way valve (21) selectively deviates the liquid flow between the treatment tank (12) and a discharge pipe (23) into the sea.

2. System according to claim 1 **characterised in that** said level sensors comprise a pair of capacity level sensors (24, 25) to determine the amount of liquid to be treated, and a third sensor (26) which acts as a safety sensor for "overflow".

3. System according to claim 1 **characterised in that** said three-way valve (21) is controlled by an actuator (22).

4. System according to claim 1 **characterised in that** as the sterilising compound contained in a separated tank (29) is used one of sodium hypochlorite, peracetic acid, or hydrogen peroxide, with predetermined quantities and contact times.

## Patentansprüche

1. System für die Abwasserbehandlung (11) an Bord eines Schiffes, wobei dieses System einen Behandlungstank (12), mit dem durch ein mit einem Sammeltank (27) des Schiffes verbundenes erstes Rohr (13) eine Abwasser-Zerkleinerungspumpe (14) für den Transfer des Abwassers verbunden ist, ein mit einer Meerwasser-Transferpumpe (16) versehenes zweites Rohr (15), ein mit einer Dosierpumpe (18) für die in einem separaten Tank (29) enthaltene Desinfektionsverbindung bestücktes drittes Rohr (17), wobei dem Behandlungstank (12) mindestens zwei Niveausensoren (24, 25, und 26) zum Bestimmen der Menge der zu behandelnden Flüssigkeit zugeordnet sind, und eine von einem Mikroprozessor (28) gesteuerte elektrische Steuertafel mit Flüssigkristallanzeige und Tastatur umfasst, **dadurch gekennzeichnet, dass** das System eine Zerkleinerungs- und Umwälzpumpe (19) umfasst, die auf einem vierten Rohr (20) angeordnet ist, das mit einem Drei-Wege-Ventil (21) versehen ist, das den Flüssigkeitsstrom selektiv zwischen dem Behandlungstank (12) und einem Abflussrohr (23) ins Meer umleitet.

2. System nach Anspruch 1, **dadurch gekennzeichnet, dass** die Niveausensoren ein Paar kapazitiver Niveausensoren (24, 25) zum Bestimmen der Menge der zu behandelnden Flüssigkeit und einen dritten Sensor (26) umfassen, der als Sicherheitssensor gegen "Überlaufen" fungiert.

3. System nach Anspruch 1, **dadurch gekennzeichnet, dass** das Drei-Wege-Ventil (21) von einem Aktuator (22) gesteuert wird.

4. System nach Anspruch 1, **dadurch gekennzeichnet, dass** als die in einem separaten Tank (29) enthaltene Desinfektionsverbindung eines von Natriumhypochlorit, Peressigsäure oder Wasserstoffperoxid mit vorbestimmten Mengen und Kontaktzeiten verwendet wird.

## Revendications

1. Système pour le traitement d'eaux usées (11) à bord d'un bateau, ledit système comprenant un réservoir de traitement (12) auquel sont associés une pompe dilacératrice d'eaux usées (14) pour le transfert des eaux usées à travers un premier tube (13) relié à un réservoir de retenue du bateau (27), un deuxième tube (15) sur lequel est prédisposée une pompe de transfert d'eau de mer (16), un troisième tube (17) monté avec une pompe de dosage (18) pour le composé stérilisant contenu dans un réservoir séparé (29), audit réservoir de traitement (12) étant associés au moins deux capteurs de niveau (24, 25 et 26) pour déterminer la quantité de liquide à traiter et un tableau de commande électrique avec affichage à cristaux liquides et clavier tactile, contrôlés par un microprocesseur (28), **caractérisé en ce que** le système comprend une pompe de macération et recirculation (19) agencée sur un quatrième tube (20) équipé d'une vanne à trois voies (21) qui dévie sélectivement le flux de liquide entre le réservoir de traitement (12) et un tube de décharge (23) dans la mer.

2. Système selon la revendication 1, **caractérisé en ce que** lesdits capteurs de niveau comprennent une paire de capteurs de niveau de capacité (24, 25) pour déterminer la quantité de liquide à traiter, et un troisième capteur (26) qui agit comme un capteur de sécurité de "trop-plein".

3. Système selon la revendication 1, **caractérisé en ce que** ladite vanne à trois voies (21) est commandée par un actuateur (22).

4. Système selon la revendication 1, **caractérisé en ce que** pour le composé stérilisant contenu dans un réservoir séparé (29) est utilisé un parmi l'hypochlorite de sodium, l'acide peracétique ou le peroxyde d'hydrogène, avec des quantités et des temps de contact prédéterminés.
